# EUROPEAN PATENT APPLICATION

(11) **EP 4 439 747 A1**
(43) Date of publication of application: **02.10.2024**
(21) Application number: 21963276.7
(22) Date of filing: 05.11.2021
(51) Int. Cl.: H01M 10/04, H01M 50/466

(54) **APPARATUS FOR PRODUCING MULTILAYER BODY FOR SECONDARY BATTERIES**

(71) Applicant: Shimane Jidoki Co., Ltd., Matsue-shi, Shimane 690-0331 (JP)
(72) Inventor: SHINGU, Kunitaka, Matsue-shi, Shimane 690-0331 (JP); NOTSU, Norihito, Matsue-shi, Shimane 690-0331 (JP); KAWAGUCHI, Akiyuki, Matsue-shi, Shimane 690-0331 (JP)
(74) Representative: Louis Pöhlau Lohrentz
(86) International application number: PCT/JP2021/040782
(87) International publication number: WO 2023/079681

(57) **Abstract**

The invention provides a high-speed manufacturing technology for producing a stack for a secondary battery. The stack manufacturing apparatus (1) creates a stack (2) that includes a band-shaped separator (S) folded in a zigzag manner and electrode sheets alternately stacked with the separator in between. The apparatus features a transfer robot (12) that sequentially places negative electrode sheets (91) on a placement table (41), a mechanism for arranging positive electrode sheets (92) in a standby position, a separator supply unit (30) to supply the separator without slack, and a rotary chuck mechanism (43) with two chucks (432) that hold and transfer the positive electrode sheet (91) and separator (S) together onto the stack. The free part of the separator is controlled to match the width of the electrode sheets.

## Description

### Technical Field

The present invention relates to an apparatus for manufacturing a stack for a secondary battery, the stack including a separator folded in a zigzag manner that is interposed between electrode sheets, and more particularly to an apparatus capable of forming the stack stably and at high speed.

### Background Art

For manufacture of a secondary battery, a stack is formed. The stack includes positive electrode sheets and negative electrode sheets which are alternately stacked with a separator interposed therebetween.

For example, a technology using a band-shaped separator involves:
1) placing a positive electrode sheet,
2) moving a supply roller for a separator from a left side to a right side of the positive electrode sheet so that the separator is extended in a width direction of the positive electrode sheet to cover the positive electrode sheet,
3) placing a negative electrode sheet on the separator,
4) moving the supply roller for the separator from a right side to a left side of the negative electrode sheet so that the separator is extended in a width direction of the negative electrode sheet to cover the negative electrode sheet,
1) placing another positive electrode sheet on the separator, and so on. The steps 1) to 4) are repeated to form a stack.

However, the related-art technology has the following problems.

The positive electrode sheets and the negative electrode sheets are alternately transferred with use of, for example, one arm. Thus, there is a problem in that high-speed placement is difficult.

Further, the separator is moved in a reciprocating manner above a placement location. Thus, a volume practically occupied by a reciprocating mechanism increases. Hence, there are also other problems in that high-speed driving is difficult to perform because interference with the arm is to be avoided, and in addition, a degree of freedom in design of a system is decreased.

Further, even when high-speed driving is achieved, reciprocation is intermittently performed. Thus, there is a problem in that excessive rotation of a separator roll at a proximal end may cause slack.

### Citation List

### Patent Literature

[PTL 1] JP 2004-022449 A
[PTL 2] JP 2017-016946 A

### Summary of Invention

### Technical Problem

The present invention has been made in view of the problems described above, and has an object to provide a technology for manufacturing a stack for a secondary battery at high speed.

### Solution to Problem

According to claim 1, there is provided an apparatus for manufacturing a stack for a secondary battery, the stack including a band-shaped separator elongated in one direction, which is folded in a zigzag manner, and electrode sheets A and electrode sheets B, each basically being a rectangular flat sheet, which are stacked alternately while the separator is interposed therebetween, the folding in the zigzag manner having a folding-line direction being a band width direction, the apparatus including: first transfer means configured to transfer the electrode sheets A in order onto a placement table with the electrode sheets A oriented in the same orientation direction; arrangement means configured to arrange the electrode sheet B at a standby position with sides of the electrode sheet B being aligned in parallel to sides of the electrode sheet A placed on the placement table, which extend in the folding-line direction; separator supply means configured to extend the separator from a feeding source, cause the separator to pass directly above the electrode sheet B being at the standby position, and supply the separator without slack to a stack on the placement table, the stack being a feeding destination; second transfer means, which includes two holders arranged so as to be opposed to each other in the folding-line direction and is configured to hold the electrode sheet B being at the standby position and the separator thereabove together so that a free part of the separator, which extends between the electrode sheet B being at the standby position and an uppermost one of the electrode sheets A being at a placement position, has a predetermined length and transfer the electrode sheet B and the separator onto the uppermost electrode sheet A on the placement table in order; and transfer control means configured to control a transfer order so that the transfer performed by the first transfer means and the transfer performed by the second transfer means alternate with each other.

Specifically, according to the invention of claim 1, the separator can be folded in a Z-shape so as to be interposed between the electrode sheet B and the electrode sheet A in order while being pulled out through transfer movement for the electrode sheets B. Thus, the stack can be manufactured at high speed.

The electrode sheet A and the electrode sheet B are electrode sheets which are provided such that one of the electrode sheet A and the electrode sheet B is a positive electrode sheet and another one thereof is a negative electrode sheet. Both of the electrode sheets have substantially the same shape. However, the negative electrode sheet may be larger than the positive electrode sheet. As for the separator, its length in the folding-line direction may be larger than those of the electrode sheets so as to increase insulation reliability.

It is apparent that the predetermined length is a length that allows achievement of folding in a zigzag manner and is substantially equal to a width of the electrode sheet A or the electrode sheet B. It is preferred that the predetermined length be a length with an appropriate margin for folding.

A way of holding with the holders is not limited to any particular one as long as the electrode sheet B and the separator can be held together, and examples of holding include pinching. Besides, suction can also be used when the separator is porous.

Further, the holders perform holding and releasing. However, the holding and releasing may be appropriately accompanied by an operation such as pullout or insertion so as to avoid interference with the stack or the like.

According to claim 2, there is provided an apparatus for manufacturing a stack for a secondary battery, the stack including a band-shaped separator elongated in one direction, which is folded in a zigzag manner, and electrode sheets A and electrode sheets B, each basically being a rectangular flat sheet, which are stacked alternately while the separator is interposed therebetween, the folding in the zigzag manner having a folding-line direction being a band width direction, the apparatus including: a placement table on which formation of the stack is performed; arrangement means configured to arrange the electrode sheet B at a standby position with sides of the electrode sheet B being aligned in parallel to sides of the stack on the placement table, which extend in the folding-line direction; separator supply means configured to extend the separator from a feeding source, cause the separator to pass directly above the electrode sheet B being at the standby position, and supply the separator without slack to the stack on the placement table, the stack being a feeding destination; first transfer means configured to transfer the electrode sheet A onto the electrode sheet B being at the standby position so that the separator is interposed between the electrode sheet B and the electrode sheet A with the electrode sheet B and the electrode sheet A oriented in the same orientation direction; second transfer means, which includes two holders arranged so as to be opposed to each other in the folding-line direction and is configured to hold the electrode sheet B, the separator, and the electrode sheet A together, each being at the standby position, with the holders so that a free part of the separator, which extends between the electrode sheet B being at the standby position and an uppermost one of the electrode sheets A being at a placement position, has a predetermined length and transfer the electrode sheet B, the separator, and the electrode sheet A onto the uppermost electrode sheet A on the placement table in order; and transfer control means configured to control a transfer order so that the transfer performed by the first transfer means and the transfer performed by the second transfer means alternate with each other.

Specifically, according to the invention of claim 2, the electrode sheet B and the electrode sheet A are transferred together. As a result, the separator interposed therebetween can be folded in a Z-shape so as to be stacked in order onto the placement table while being pulled out. Thus, the stack can be manufactured at high speed.

According to claim 3, in the apparatus for manufacturing a stack for a secondary battery according to claim 1 or 2, the apparatus for manufacturing a stack for a secondary battery further includes lowering means configured to lower the placement table in a step-by-step manner along with the transfer so that a height of an uppermost surface on the placement table is kept constant.

Specifically, according to the invention of claim 3, the stack can be stably manufactured without causing a positional shift due to stacking.

The lowering includes, besides dynamic lowering of the placement table itself, passive downward movement as a result of downward pushing occurring along with the transfer. Thus, the transfer means may also serve as the lowering means depending on a mode of use.

According to claim 4, in the apparatus for manufacturing a stack for a secondary battery according to claim 1 or 2, the uppermost electrode sheet on the placement table and the electrode sheet at the standby position are aligned in height so as to be positioned at practically the same height, and the second transfer means includes: two bifurcated arms opposed to each other, each having an axially rotatable proximal end and arm distal ends implanted with the holders, respectively, the bifurcated arms having rotary shafts that are aligned with each other so as to extend on the same straight line in the folding-line direction; drive means configured to axially rotate the bifurcated arms; opening and closing control means configured to control the holders to alternately perform holding and releasing for each half revolution.

Specifically, according to the invention of claim 4, transfer and return are achieved through rotational driving with alignment of phases and positions to thereby achieve stable high-speed manufacture.

The wording "practically the same height" means that, in the case of the apparatus of claim 1, the uppermost electrode sheet A on the placement table and the electrode sheet B at the standby position are located at substantially the same height, and in the case of the apparatus of claim 2, the uppermost electrode sheet A on the placement table and the electrode sheet A at the standby position are located at substantially the same height.

The bifurcated arm is defined broadly and is not limited to any particular one as long as the transfer is performed twice while the rotary shaft is making one revolution with circular movement of the two holders. Examples of the bifurcated arm include not only a bifurcated arm that is rotationally symmetric through 180 degrees but also a bifurcated arm having disc surfaces on which two holders are mounted.

In order to achieve the Z-folding, there is provided a phase cancellation mechanism for allowing the holder to perform axial rotation in a direction opposite to axial rotation of the arm so as to prevent the orientation of the electrode sheets from being changed. Further, a distance between the two holders provided at the distal ends of the arm is set so as to allow the Z-folding (a distance between centers of the holders is set about twice as large as the width of the electrode sheets).

According to claim 5, in the apparatus for manufacturing a stack for a secondary battery according to claim 4, the separator supply means includes: a cylindrical body having an axis extending in the folding-line direction, which is arranged on a side opposite to the placement table when viewed from the standby position and is to be brought into contact with the separator so as to cause the separator to pass directly above the electrode sheet B; and reciprocating means configured to substantially horizontally move the cylindrical body forward and backward without changing a direction of the axis of the cylindrical body so as to reduce a fluctuation in tension of the separator, which occurs at the time of the transfer performed by the second transfer means.

Specifically, according to the inventor of claim 5, a feeding speed for the separator can be kept constant or be set to fall within a given range to thereby achieve stable manufacture at high speed.

As an example of supply of the separator, the separator is supplied from a position appropriately higher than the cylindrical body, is brought into contact with a lower part of the cylindrical body by a length corresponding to a central angle of about 90 degrees, is reoriented horizontally, and is caused to pass directly above the standby position.

The wording "substantially horizontally" means that displacement in a vertical direction may be appropriately included so as to avoid interference or the like.

### Advantageous Effects of Invention

The present invention can provide a technology for manufacturing a stack for a secondary battery at high speed.

### Brief Description of Drawings

FIG. 1 is a schematic perspective view of an apparatus for manufacturing a stack for a secondary battery according to a first embodiment.
FIGS. 2 are explanatory views for illustrating a sequence of operations according to the first embodiment.
FIGS. 3 are explanatory views for illustrating the sequence of operations according to the first embodiment.
FIG. 4 is a schematic perspective view of an apparatus for manufacturing a stack for a secondary battery according to a second embodiment.
FIGS. 5 are explanatory views for illustrating a sequence of operations according to the second embodiment.
FIGS. 6 are explanatory views for illustrating the sequence of operations according to the second embodiment.
FIG. 7 is a view including a plan view and a front view for illustrating an example of an actual stack.

### Description of Embodiments

Hereinbelow, with reference to the drawings, detailed description is given of embodiments of the present invention.

### <First Embodiment>

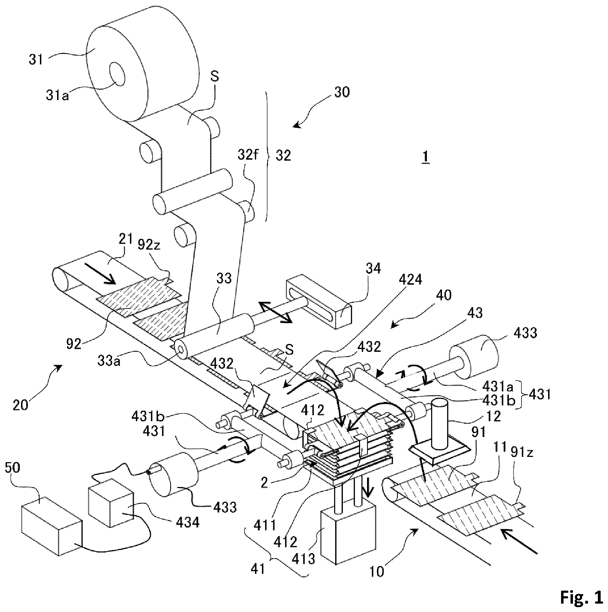

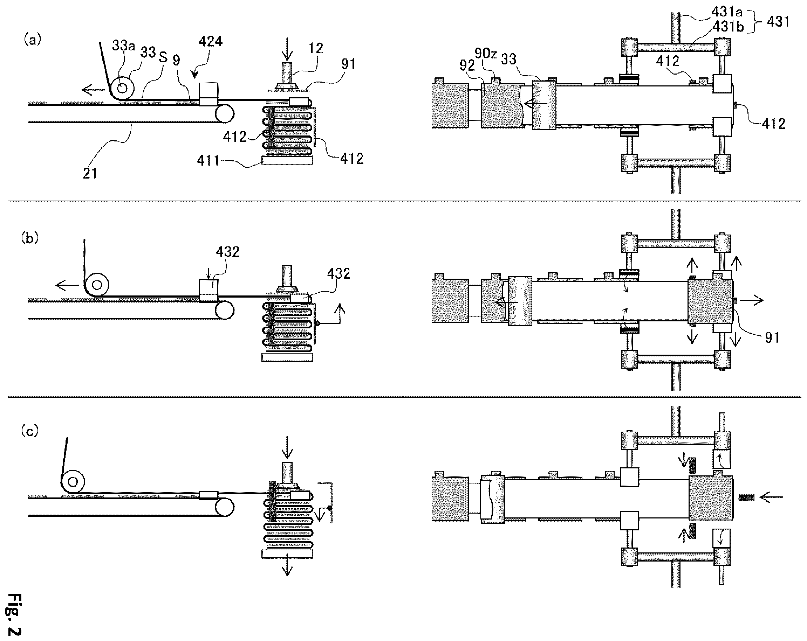

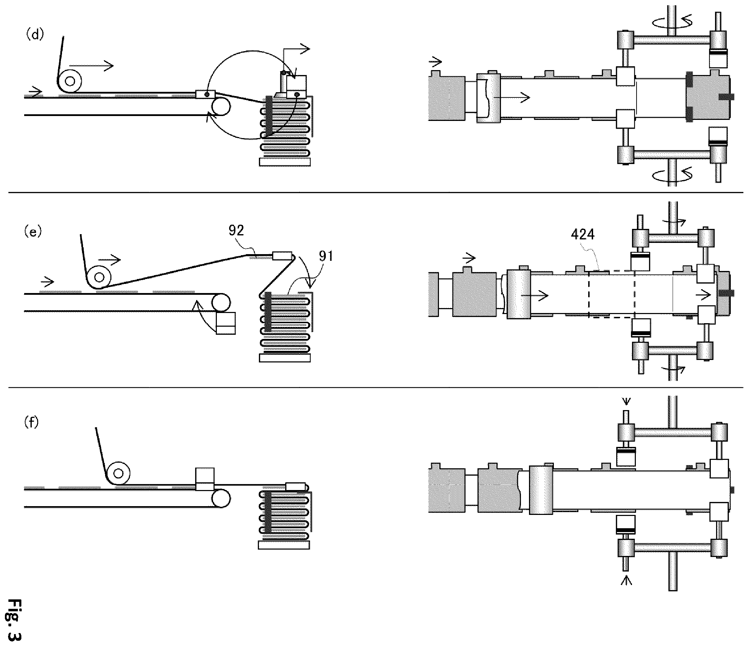

FIG. 1 is a schematic perspective view of an apparatus for manufacturing a stack for a secondary battery. FIGS. 2 and FIGS. 3 are explanatory views (left side views on the left side and plan views on the right side) for illustrating a sequence of operations. In the drawings, a configuration or a way of drawing is appropriately simplified for convenience of description.

In the following description, the apparatus for manufacturing a stack for a secondary battery is appropriately referred to simply as "stack manufacturing apparatus".

In a first embodiment, description is given of a stack manufacturing apparatus that forms a stack in the following manner. A negative electrode sheet is first placed on a placement table. A positive electrode sheet is transferred onto the negative electrode sheet while a separator is being folded thereunder to form a stack.

The stack manufacturing apparatus 1 includes, as main components, a negative electrode sheet supply unit 10, a positive electrode sheet supply unit 20, a separator supply unit 30, a stacking unit 40, and a sequence control unit 50. The stack manufacturing apparatus 1 manufactures a stack 2 including a separator S having a band-like shape folded in a zigzag manner, and a negative electrode sheet 91 and a positive electrode sheet 92. The negative electrode sheet 91 and the positive electrode sheet 92 are alternately stacked while the separator S is interposed therebetween.

The negative electrode sheet 91 is a thin copper sheet basically having a rectangular shape and has a tongue piece 91z formed at a position shifted from a center of a short side of the rectangle.

The positive electrode sheet 92 is a thin aluminum sheet also basically having a rectangular shape and has a tongue piece 92z formed at a position shifted from a center of a short side of the rectangle.

In this embodiment, the negative electrode sheet 91 is larger than the positive electrode sheet 92.

Specifically, for example, a thin copper sheet having a length of 146 mm, a breadth (width) of 96 mm, and a thickness of 0.02 mm is used as the negative electrode sheet 91, and a thin aluminum sheet having a length of 142 mm, a breadth (width) of 92 mm, and a thickness of 0.02 mm is used as the positive electrode sheet 92.

In the following description, the negative electrode sheet 91 and the positive electrode sheet 92 are appropriately referred to as "electrode sheets 90" when the negative electrode sheet 91 and the positive electrode sheet 92 are not required to be distinguished from each other.

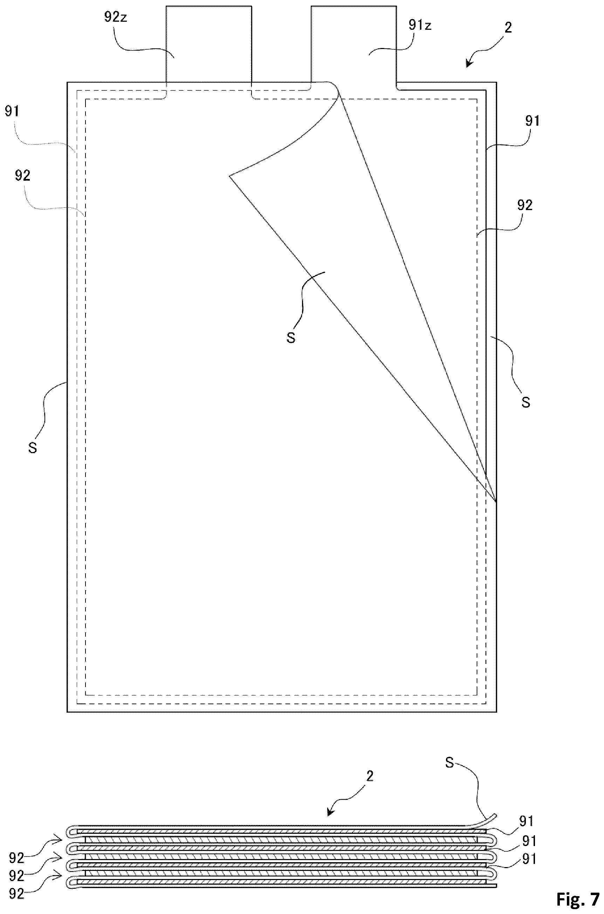

Further, the width of the separator S is set longer than the longitudinal length of the negative electrode sheet 91 so as to prevent short-circuiting. For example, the separator S may have a width of 150 mm and a thickness of 0.02 mm. In some drawings, however, the width of the separator S is illustrated as being shorter than the electrode sheets 90 for convenience of the description. FIG. 7 includes a plan view and a front view, in which the stack 2 is illustrated with a ratio close to an actual one.

The negative electrode sheet supply unit 10 includes an endless conveyor 11 and a transfer robot 12. The endless conveyor 11 intermittently conveys the negative electrode sheets 91 at equal intervals with the negative electrode sheets 91 oriented in the same direction. The transfer robot 12 repeats an operation of attracting the negative electrode sheet 91 arriving at a most downstream position on the endless conveyor 11 from directly above, transferring the negative electrode sheet 91 onto a placement table 41 of the stacking unit 40, and releasing the negative electrode sheet 91.

The positive electrode sheet supply unit 20 includes an endless conveyor 21. The endless conveyor 21 intermittently transfers the positive electrode sheets 92 at equal intervals with the positive electrode sheets 92 oriented in the same direction.

The separator supply unit 30 includes a separator roll 31, an orientation roller group 32, a dancer roller 33, and a reciprocating drive unit 34. The separator roll 31 is formed by winding the separator S having a band-like shape elongated in one direction around a shaft 31a. The orientation roller group 32 passes the separator S, which has been fed from the separator roll 31, to the vicinity of a downstream side of the endless conveyor 21 while appropriately changing a direction in which the separator S is conveyed. The dancer roller 33 has a cylindrical shape and is positioned above the vicinity of the most downstream side of the endless conveyor 21.

A last orientation roller 32f of the orientation roller group 32 is provided at a position higher than the dancer roller 33 so as to supply the separator S from above the dancer roller 33. The separator S that has been supplied from above is brought into contact with a lower part of a peripheral surface of the dancer roller 33 so that the separator S is reoriented substantially horizontally. In this manner, the separator S is caused to pass directly above the positive electrode sheet 92 being at a standby position 424 described later.

The shaft 31a of the separator roll 31 is arranged horizontally. Although the separator S moves up and down until the separator S reaches the stack 2, the separator S is fed without being moved in a lateral direction, i.e., a direction of the shaft 31a (this direction is also a width direction of the separator S) and, in this sense, is fed linearly when viewed from the separator roll 31.

In the stack 2, the separator S is folded in a zigzag manner. A folding-line direction of the zigzag folding is the same as (parallel to) the direction of the shaft 31a described above or the width direction of the separator S. A shaft 33a of the dancer roller 33 and shafts of the orientation roller group 32 also extend in parallel to the folding-line direction.

The reciprocating drive unit 34 reciprocates above the endless conveyor 21 while holding the shaft 33a of the dancer roller 33 so as not to change an orientation of the shaft 33a. The separator S is stretched without slack from the separator roll 31 corresponding to a feeding source to the stack 2 corresponding to a feeding destination. When the positive electrode sheet 92 is stacked on the placement table 41 while the separator S is being folded thereunder, tension fluctuates significantly. The reciprocating drive unit 34 absorbs or alleviates the tension fluctuation so as to prevent a tear in the separator S or excessive feeding due to inertia of the separator roll 31. Reciprocating movement is described later.

The stacking unit 40 includes the placement table 41 and a rotary chuck mechanism 43.

The placement table 41 includes a seat 411, holding claws 412, and a downward driving unit 413.

The seat 411 is a place where the stack 2 is formed. On the seat 411, the positive electrode sheets 92 and the negative electrode sheets 91 are alternately stacked while the separator S folded in the zigzag manner is interposed therebetween. The negative electrode sheets 91 are stacked by the transfer robot 12, and the positive electrode sheets 92 are stacked while the separator S is being folded thereunder by the rotary chuck mechanism 93.

Both of the positive electrode sheets 92 and the negative electrode sheets 91 are arranged so that their long sides extend in the folding-line direction.

The holding claws 412 are L-shaped claws that hold down the stack 2 while regulating side surfaces of the stack 2 so as to prevent an uppermost negative electrode sheet 91 on the seat 411 from being moved. After the negative electrode sheet 91 is transferred from the transfer robot 12, the holding claws 412 are temporarily pulled out from the stack 2 and then hold down the uppermost negative electrode sheet 91 again. After that, the separator S and the positive electrode sheet 92 are stacked in a bundle on the negative electrode sheet 91. The holding claws 412 remain in the same state until a next negative electrode sheet 91 is transferred from the transfer robot 12.

The downward driving unit 413 performs lowering the seat 411 in a step-by-step manner each time the negative electrode sheet 91 is stacked so that the uppermost negative electrode sheet 91 on the seat 411 is aligned with the standby position 424 in height. As a result, the height at which the uppermost electrode sheet 90 is located is always constant, improving transfer stability. A lowering interval corresponds to a total thickness of one negative electrode sheet 91, one positive electrode sheet 92, and two separators. When the lowering is performed immediately after the holding claws 412 start holding the uppermost positive electrode sheet 92, the stack 2 has improved posture stability.

The rotary chuck mechanism 43 picks up the positive electrode sheet 92 arriving at the most downstream position on the endless conveyor 21 and stacks the positive electrode sheet 92 on the placement table 41. For convenience, the most downstream position is referred to as "standby position 424".

A distance between the positive electrode sheet 92 at the standby position 424 and the negative electrode sheet 91 on the seat 411 is designed so as to be equal to: the width (length of a short side) of the negative electrode sheet 91 + α. Specifically, a positional relationship is determined so that a length of a free part of the separator S, which extends between the positive electrode sheet 92 at the standby position 424 and the negative electrode sheet 91 on the seat 411, is substantially equal to a width of (length of a short side) of the electrode sheet 90. Thus, when the positive electrode sheet 92 is transferred, the separator S is interposed between the positive electrode sheet 92 and the negative electrode sheet 91 so that an interposed part has a practically appropriate length.

The rotary chuck mechanism 43 includes a pair of bifurcated arms 431, two sets of opening and closing chucks 432, drive motors 433, and a chuck control unit 434.

Each of the bifurcated arms 431 includes an arm 431b. The arm 431b rotates about a shaft 431a and is bifurcated in the middle. The opening and closing chucks 432 are implanted in two distal ends of the bifurcated arm 431, respectively.

Each of the bifurcated arms 431, which includes the opening and closing chucks 432, is rotationally symmetric through 180 degrees, and the bifurcated arms 431 are arranged in an opposed relationship across the separator S.

The shafts 431a extend on the same straight line in the folding-line direction at the same height as the standby position 424 and an uppermost surface on the seat 411 and are positioned in the middle between the standby position 424 and the seat 411.

Phases of the opening and closing chucks 432 facing each other are aligned. Specifically, the opening and closing chuck 432 is set at the same height as a height of the opening and closing chuck 432 opposed thereto.

With such a positional relationship, when the bifurcated arm 431 is moved in a circle through rotation of the shaft 431a, one of the opening and closing chucks 432 arrives at the standby position 424 and another one thereof arrives at a position on the uppermost surface on the seat 411 for each half revolution.

At this time, the chuck control unit 434 closes two opposed opening and closing chucks 432 (folds down upper flaps thereof) that are located at the standby position 424 and controls the opening and closing chucks 432 to grip the positive electrode sheet 92 and the separator S lying directly thereon so that short sides of the positive electrode sheet 92 and end sides of the separator S are aligned with each other.

Further, two opposed opening and closing chucks 432 that are located on the uppermost surface on the seat 411 are controlled to be released from pressure and pulled out so as to complete the transfer of the positive electrode sheet 92 onto the seat 411. Their upper flaps are turned up before a next half revolution.

Through the half revolution, the separator S located between the positive electrode sheet 92 and the negative electrode sheet 91 is folded in a Z-shape so that the folded part has an appropriate length and is placed on the negative electrode sheet 91 on the seat 411.

The opening and closing chucks 432 grip and transfer the positive electrode sheet 92 with an upper surface of the positive electrode sheet 92 always facing upward.

The sequence control unit 50 controls overall driving so that the positive electrode sheets 92 and the negative electrode sheets 91 are transferred alternately.

First, the endless conveyor 11, the transfer robot 12, and the endless conveyor 21 are intermittently driven in synchronization.

The sequence control unit 50 controls the drive motors 433, the chuck control unit 434, the reciprocating drive unit 34, the downward driving unit 413, and the like at the same time intervals as those of the intermittent driving to thereby form the stack 2 in order.

Now, motions of the stacking unit 40 under control of the sequence control unit 50 are mainly described.

First, the transfer robot 12 transfers the negative electrode sheet 91 onto the seat 411 (FIG. 2a). The dancer roller 33 is moved back toward the positive electrode sheet supply unit 20 (moved to an upstream side of the endless conveyor 21).

Next, the holding claws 412 are pulled out from the stack 2 and are raised for next holding (FIG. 2b). Further, the opening and closing chucks 432 on the seat 411 side are slid simultaneously with the release of pressure from their upper flaps and are pulled out from the stack 2. At this time, the separator S and the stack 2 are being held by the transfer robot 12, and thus posture stability is maintained.

Meanwhile, the upper flaps of the opening and closing chucks 432 on the standby position 424 side are closed, and the opening and closing chucks 432 grip the separator S and the positive electrode sheet 92 together.

The dancer roller 33 is continuously moved back toward the positive electrode sheet supply unit 20.

Next, the holding claws 412 start holding down the uppermost negative electrode sheet 91 again, and the downward driving unit 413 lowers the seat 411 by one step (FIG. 2c) . Further, the upper flaps of the opening and closing chucks 432 on the seat 411 side are turned up. Meanwhile, the transfer robot 12 is continuously holding the separator S and the stack 2 so as to keep their postures.

Next, the bifurcated arms 431 are rotated so as to superpose the positive electrode sheet 92 and the separator S that are held in the opening and closing chucks 432 in a sandwiched manner onto the uppermost negative electrode sheet 91 on the seat 411 (FIG. 3d, FIG. 3e) . Further, the dancer roller 33 is moved forward in synchronization with the rotation of the bifurcated arms 431. The transfer robot 12 is raised so as to prepare for a transfer motion for a next negative electrode sheet 91.

The endless conveyor 21 is driven to convey the next positive electrode sheet 92 to the standby position 424.

Next, the opening and closing chucks 432 on the standby position 424 side are pushed inward (FIG. 3f). As a result, the opening and closing chucks 432 are returned to their initial state (FIG. 2a).

The sequence control unit 50 controls the reciprocating drive unit 34 in synchronization with the rotation of the bifurcated arms 431. Thus, an excessive increase in tension of the separator S is reduced to prevent a tear in the separator S and excessive rotation of the separator roll 31. In other words, the forward movement and the backward movement of the dancer roller 33 are controlled so as to prevent a tear and excessive rotation.

As described above, with the stack manufacturing apparatus 1 according to the first embodiment, the rotary chuck mechanism 43 enables folding of the separator S in a zigzag manner simultaneously with the transfer of the positive electrode sheet 92 so that the separator S is interposed between the negative electrode sheet 91 and the positive electrode sheet 92. Thus, the stack 2 can be manufactured at high speed with the alignment of the phases.

### <Second Embodiment>

In a second embodiment, description is given of a stack manufacturing apparatus that superposes a negative electrode sheet on a positive electrode sheet which is overlaid by a separator and transfers these three elements together onto a placement table to form a stack.

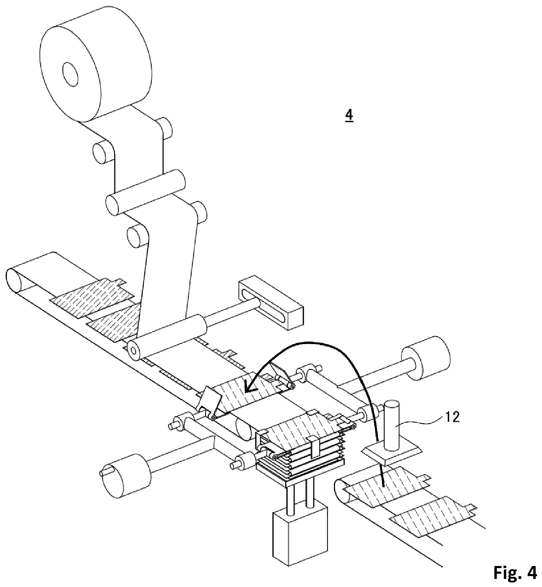

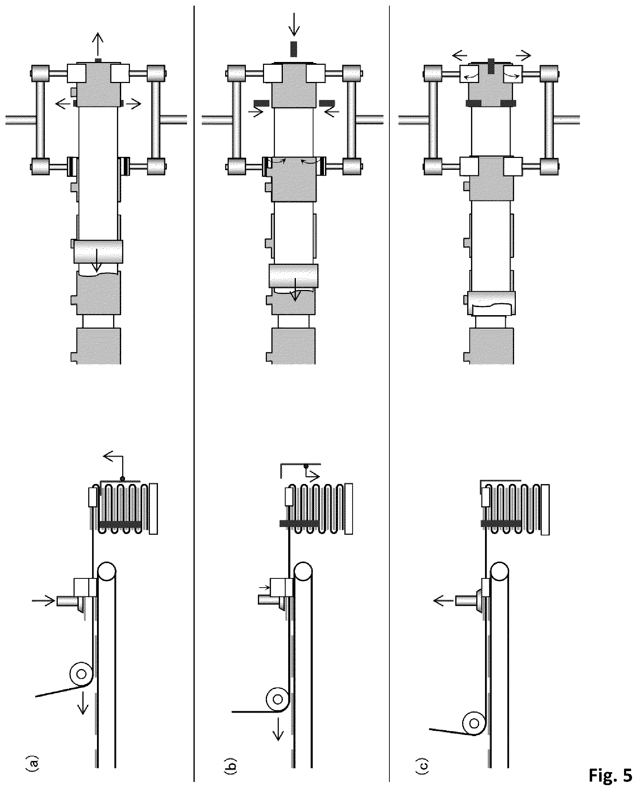

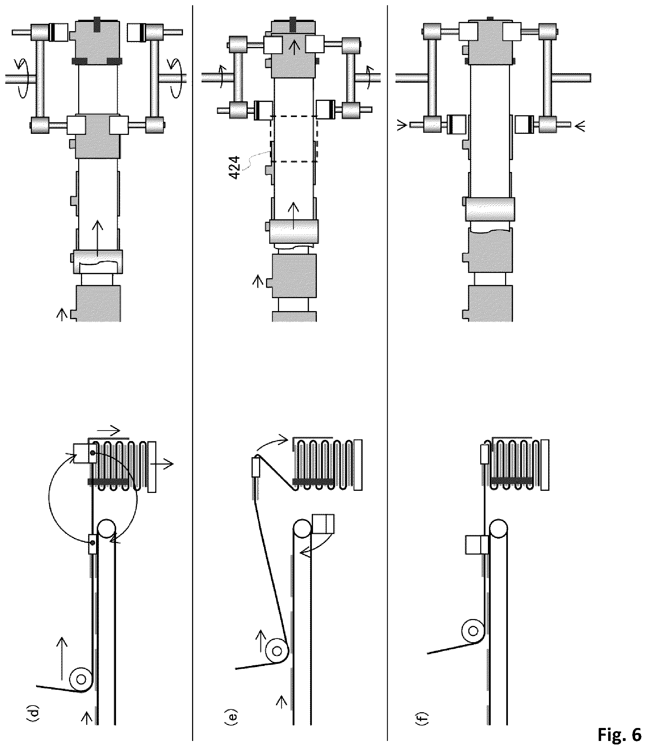

FIG. 4 is an explanatory view for illustrating transfer of a negative electrode sheet according to the second embodiment. FIGS. 5 and FIGS. 6 are explanatory views for illustrating a sequence of operations (left side views on the left side and plan views on the right side).

In the second embodiment, parts different from those according to the first embodiment are described. The same configurations are denoted by the same reference symbols, and a description thereof is omitted.

In this embodiment, a transfer robot 12 repeats an operation of attracting a negative electrode sheet 91 arriving at a most downstream position on an endless conveyor 11 from directly above, transferring the negative electrode sheet 91 to a standby position 424 in a stacking unit 40, and releasing the negative electrode sheet 91.

A seat 411 is a place where a stack 2 is formed. On the seat 411, negative electrode sheets 91, a separator S, and positive electrode sheets 92 are stacked together while the separator S folded in the zigzag manner is interposed therebetween.

Holding claws 412 are L-shaped claws that hold down the stack 2 while regulating side surfaces of the stack 2 so as to prevent an uppermost negative electrode sheet 91 on the seat 411 from being moved. After a next negative electrode sheet 91 is stacked together with the separator S and the positive electrode sheet 92 onto the seat 411, the holding claws 412 are temporarily pulled out and then hold down the uppermost negative electrode sheet 91 again. The holding claws 412 repeat this movement in order.

The downward driving unit 413 performs lowering the seat 411 in a step-by-step manner each time a bundle of the negative electrode sheet 91, the separator S, and the positive electrode sheet 92 is stacked so that the uppermost negative electrode sheet 91 on the seat 411 is aligned with the standby position 424 in height. As a result, the height at which the uppermost electrode sheet 90 is located is always constant, improving transfer stability.

Opening and closing chucks 432 located at the standby position 424 hold the positive electrode sheet 92, the separator S lying thereon, and the negative electrode sheet 91 transferred by the transfer robot 12 together in a sandwiching manner. Through rotation of bifurcated arms 431, the separator S is pulled again from an upstream side and is superposed on the stack 2 on the seat 411 while a set of the electrode sheets 90 is being moved in a semicircular motion. At this time, a free part of the separator S is folded in a Z-shape with an appropriate length to thereby ensure insulation.

After the placement, the opening and closing chucks 432 release the set of the electrode sheets 90. The opening and closing chucks 432 are returned to the standby position 424 while making a semicircular motion through the rotation of the bifurcated arms 431.

Also in this case, phases are cancelled out so that the opening and closing chucks 432 grip and transfer the set of the electrode sheets 90 with an upper surface of the set of the electrode sheets 90 always facing upward.

A sequence control unit 50 controls overall driving so that the transfer of the negative electrode sheet 91 and the transfer of a bundle of the negative electrode sheet 91, the separator S, and the positive electrode sheet 92 onto the seat 411 alternate with each other.

Now, motions of a stacking unit 40 under control of the sequence control unit 50 are mainly described.

First, the transfer robot 12 transfers the negative electrode sheet 91 onto the separator S at the standby position 424 (FIG. 5a) .

Further, the holding claws 412 holding down the stack 2 are pulled out therefrom and are raised so as to prepare for next holding.

A dancer roller 33 is moved back toward a positive electrode sheet supply unit 20.

Next, the holding claws 412 hold down an uppermost negative electrode sheet 91 again (FIG. 5b). At this time, even after the holding claws 412 are pulled out from the stack 2, a posture of the stack 2 does not change because the opening and closing chucks 432 on the seat 411 side are holding the stack 2.

Upper flaps of the opening and closing chucks 432 on the standby position 424 side are closed so that the opening and closing chucks 432 grip the negative electrode sheet 91, the separator S, and the positive electrode sheet 92 together.

The dancer roller 33 is continuously moved back toward the positive electrode sheet supply unit 20.

Next, simultaneously with the release of pressure from the upper flaps of the opening and closing chucks 432 on the seat 411 side, the opening and closing chucks 432 on the seat 411 side are slid to be pulled out from the stack 2 (FIG. 5c). At this time, even after the opening and closing chucks 432 are pulled out, the posture of the stack 2 does not change because the holding claws 412 are now holding down the uppermost negative electrode sheet 91.

Next, the bifurcated arms 431 are rotated to superpose a bundle of the negative electrode sheet 91, the separator S, and the positive electrode sheet 92, which is held in the opening and closing chucks 423 in a sandwiched manner, on the uppermost negative electrode sheet 91 on the seat 411 (FIG. 6a, FIG. 6e).

Further, the dancer roller 33 is moved forward and the downward driving unit 413 lowers the seat 411 by one step in synchronization with the rotation of the bifurcated arms 431.

Further, the endless conveyor 21 is driven to convey a next positive electrode sheet 92 to the standby position 424.

Next, the opening and closing chucks on the standby position 424 side are pushed inward (FIG. 6f). As a result, the opening and closing chucks are returned to their initial state (FIG. 5a) .

The sequence control unit 50 controls the reciprocating drive unit 34 in synchronization with the rotation of the bifurcated arms 431. Thus, an excessive increase in tension of the separator S is reduced to prevent a tear in the separator S and excessive rotation of the separator roll 31. In other words, the forward movement and the backward movement of the dancer roller 33 are controlled so as to prevent a tear and excessive rotation.

As described above, with the stack manufacturing apparatus 1 according to the second embodiment, the rotary chuck mechanism 43 enables folding of the separator S in a zigzag manner simultaneously with the transfer of a set of the electrode sheets 90 so that the separator S is provided in the stack 2 in a sandwiched manner. Thus, the stack 2 can be manufactured at high speed with the alignment of the phases.

### Industrial Applicability

The application of the present invention also enables manufacture of a capacitor.

### Reference Signs List

1 stack manufacturing apparatus
2 stack
10 negative electrode sheet supply unit
11 endless conveyor
12 transfer robot
20 positive electrode sheet supply unit
21 endless conveyor
22 transfer robot
30 separator supply unit
31 separator roll (31a shaft of separator 31)
32 orientation roller group
32f orientation roller
33 dancer roller (33a shaft of dancer roller 33)
34 reciprocating drive unit
40 stacking unit
41 placement table
411 seat
412 holding claw
413 downward driving unit
424 standby position
43 rotary chuck mechanism
431 bifurcated arm
431a shaft of bifurcated arm 431
431b arm of bifurcated arm 431
432 opening and closing chuck
433 drive motor
434 chuck control unit
50 sequence control unit
90 electrode sheet
91 negative electrode sheet (91z tongue piece of negative electrode sheet)
92 positive electrode sheet (92z tongue piece of negative electrode sheet)
S separator

## Claims

1. An apparatus for manufacturing a stack for a secondary battery, the stack including a band-shaped separator elongated in one direction, which is folded in a zigzag manner, and electrode sheets A and electrode sheets B, each basically being a rectangular flat sheet, which are stacked alternately while the separator is interposed therebetween, the folding in the zigzag manner having a folding-line direction being a band width direction, the apparatus comprising:
first transfer means configured to transfer the electrode sheets A in order onto a placement table with the electrode sheets A oriented in the same orientation direction;
arrangement means configured to arrange the electrode sheet B at a standby position with sides of the electrode sheet B being aligned in parallel to sides of the electrode sheet A placed on the placement table, which extend in the folding-line direction;
separator supply means configured to extend the separator from a feeding source, cause the separator to pass directly above the electrode sheet B being at the standby position, and supply the separator without slack to a stack on the placement table, the stack being a feeding destination;
second transfer means, which includes two holders arranged so as to be opposed to each other in the folding-line direction and is configured to hold the electrode sheet B being at the standby position and the separator thereabove together so that a free part of the separator, which extends between the electrode sheet B being at the standby position and an uppermost one of the electrode sheets A being at a placement position, has a predetermined length and transfer the electrode sheet B and the separator onto the uppermost electrode sheet A on the placement table in order; and
transfer control means configured to control a transfer order so that the transfer performed by the first transfer means and the transfer performed by the second transfer means alternate with each other.

2. An apparatus for manufacturing a stack for a secondary battery, the stack including a band-shaped separator elongated in one direction, which is folded in a zigzag manner, and electrode sheets A and electrode sheets B, each basically being a rectangular flat sheet, which are stacked alternately while the separator is interposed therebetween, the folding in the zigzag manner having a folding-line direction being a band width direction, the apparatus comprising:
a placement table on which formation of the stack is performed;
arrangement means configured to arrange the electrode sheet B at a standby position with sides of the electrode sheet B being aligned in parallel to sides of the stack on the placement table, which extend in the folding-line direction;
separator supply means configured to extend the separator from a feeding source, cause the separator to pass directly above the electrode sheet B being at the standby position, and supply the separator without slack to the stack on the placement table, the stack being a feeding destination;
first transfer means configured to transfer the electrode sheet A onto the electrode sheet B being at the standby position so that the separator is interposed between the electrode sheet B and the electrode sheet A with the electrode sheet B and the electrode sheet A oriented in the same orientation direction;
second transfer means, which includes two holders arranged so as to be opposed to each other in the folding-line direction and is configured to hold the electrode sheet B, the separator, and the electrode sheet A together, each being at the standby position, with the holders so that a free part of the separator, which extends between the electrode sheet B being at the standby position and an uppermost one of the electrode sheets A being at a placement position, has a predetermined length and transfer the electrode sheet B, the separator, and the electrode sheet A onto the uppermost electrode sheet A on the placement table in order; and
transfer control means configured to control a transfer order so that the transfer performed by the first transfer means and the transfer performed by the second transfer means alternate with each other.

3. The apparatus for manufacturing a stack for a secondary battery according to claim 1 or 2, further comprising lowering means configured to lower the placement table in a step-by-step manner along with the transfer so that a height of an uppermost surface on the placement table is kept constant.

4. The apparatus for manufacturing a stack for a secondary battery according to claim 1 or 2,
wherein the uppermost electrode sheet on the placement table and the electrode sheet at the standby position are aligned in height so as to be positioned at practically the same height,
wherein the second transfer means comprises:
two bifurcated arms opposed to each other, each having an axially rotatable proximal end and arm distal ends implanted with the holders, respectively, the bifurcated arms having rotary shafts that are aligned with each other so as to extend on the same straight line in the folding-line direction;
drive means configured to axially rotate the bifurcated arms;
opening and closing control means configured to control the holders to alternately perform holding and releasing for each half revolution.

5. The apparatus for manufacturing a stack for a secondary battery according to claim 1 or 2,
wherein the separator supply means comprises:
a cylindrical body having an axis extending in the folding-line direction, which is arranged on a side opposite to the placement table when viewed from the standby position and is to be brought into contact with the separator so as to cause the separator to pass directly above the electrode sheet B; and
reciprocating means configured to substantially horizontally move the cylindrical body forward and backward without changing a direction of the axis of the cylindrical body so as to reduce a fluctuation in tension of the separator, which occurs at the time of the transfer performed by the second transfer means.
